# EUROPÄISCHE PATENTSCHRIFT

(11) **EP 0 963 918 B1**
(45) Veröffentlichungstag und Bekanntmachung des Hinweises auf die Patenterteilung: **28.02.2001**
(21) Anmeldenummer: 99110474.6
(22) Anmeldetag: 31.05.1999
(51) Int. Cl.: B65D 88/06, B65D 88/76, B65D 90/10, B65D 90/02, E03B 3/03

(54) **Wassertank**
Water tank
Citerne d'eau

(30) Priorität: 09.06.1998 DE 29810322 U
(43) Veröffentlichungstag der Anmeldung: 15.12.1999
(73) Patentinhaber: Schütz-Werke GmbH & Co. KG., D-56242 Selters (DE)
(72) Erfinder: Schütz, Udo, 56242 Selters / Westerwald (DE)
(74) Vertreter: Pürckhauer, Rolf, Dipl.-Ing.

(56) Entgegenhaltungen:
- DE-A- 19 615 582
- US-A- 4 254 885

## Beschreibung

Die Erfindung betrifft Wassertanks aus Kunststoff für die Speicherung von Regenwasser, die als Erdtanks ausgebildet sind, deren einteilig hergestellter Tankkörper aus einem zylindrischen Mantel und zwei Böden mit Verstärkungsrippen besteht und die mit einem Dom mit einer Einsteigöffnung und Anschlüssen für ein Zulauf-, ein Überlauf- und ein Entnahmerohr ausgerüstet sind.

Ein solcher Wassertank ist z.B. aus der Druckschrift DE 19 615 582 A bekannt.

Der Erfindung liegt die Aufgabe zugrunde, die Festigkeit und die Betriebssicherheit des gattungsgemäßen Wassertanks zu verbessern.

Diese Aufgabe ist erfindungsgemäß gelöst durch einen Wassertank mit den Merkmalen des Patentanspruchs 1.

Die abhängigen Ansprüche beinhalten vorteilhafte und zweckmäßige Weiterbildungen der Erfindung.

Die Erfindung ist nachstehend anhand von Zeichnungsfiguren erläutert, die folgendes darstellen:
- Fig. 1: eine Seitenansicht,
- Fig. 2: eine Draufsicht und
- Fig. 3: eine Stirnansicht des neuen Wassertanks,
- Fig. 4: einen Querschnitt des Wassertanks nach Linie IV-IV der Fig. 2 mit einer Sprengdarstellung des Tankdoms,
- Fig. 5: einen Schnitt nach Linie V-V und
- Fig. 6: einen Schnitt nach Linie VI-VI der Fig. 3 in vergrößerter Darstellung und
- Fig. 7: einen Längsschnitt des Tankdoms in vergrößerter Darstellung.

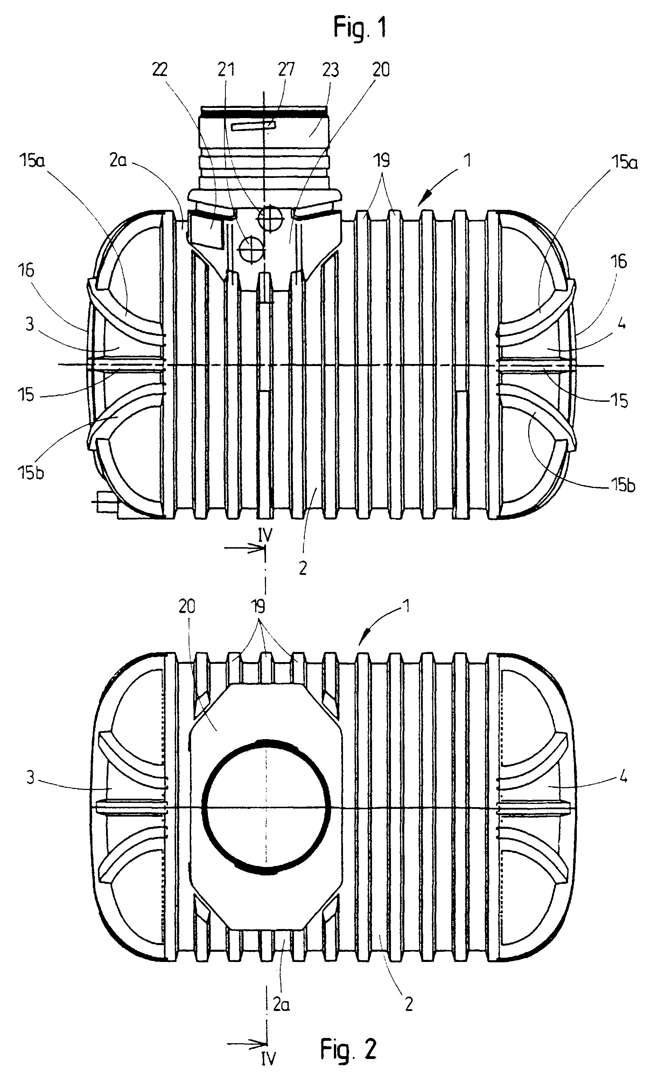

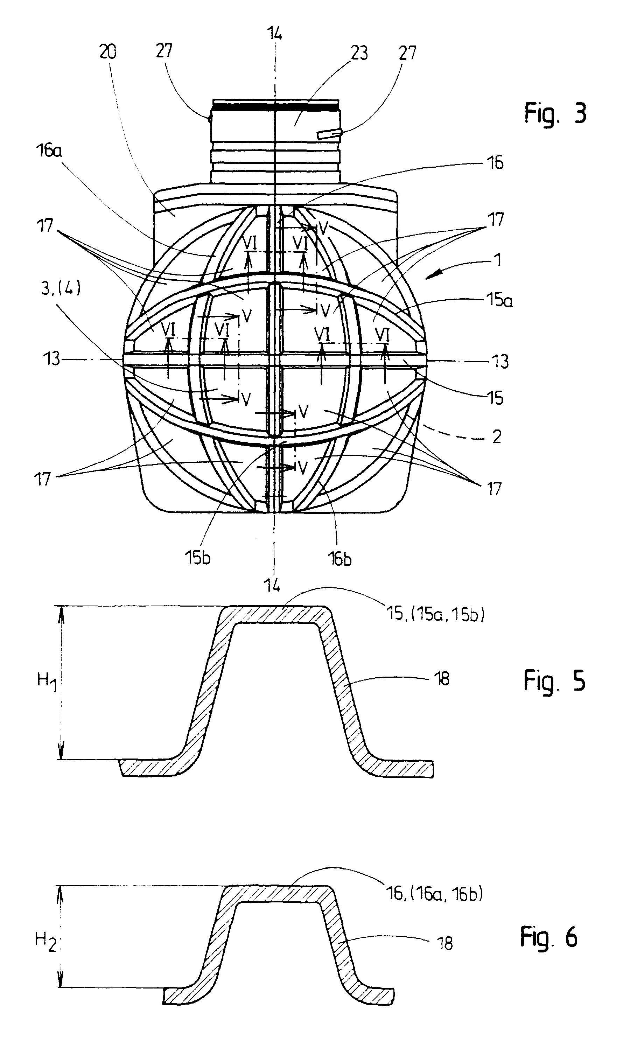

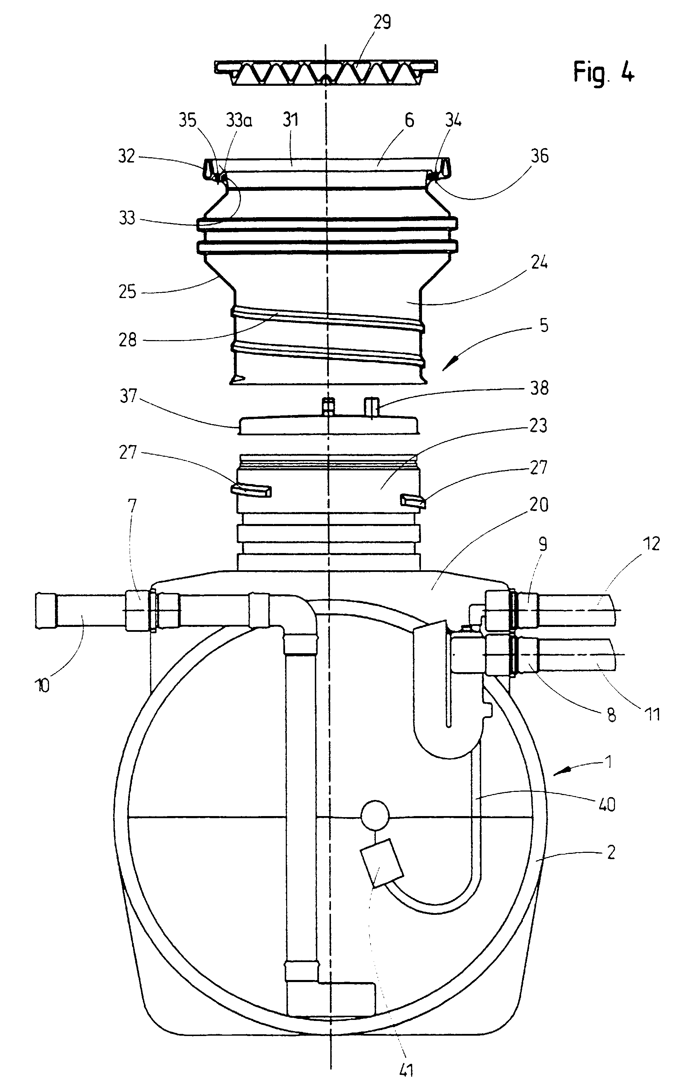

Der als Erdtank ausgebildete Wassertank 1 nach den Fign. 1 bis 4, der aus Kunststoff, vorzugsweise aus einem niedermolekularen Polyethylen rotationsgesintert ist, besteht aus einem einteiligen Tankkörper mit einem zylindrischen Mantel 2 und zwei Böden 3, 4 und ist mit einem Dom 5 mit einer Einsteigöffnung 6 und Anschlüssen 7 - 9 für ein Zulaufrohr 10, ein Überlaufrohr 11 und ein Entnahmerohr 12 ausgerüstet.

Die als Klöpperböden ausgebildeten Tankböden 3, 4 weisen jeweils eine in der horizontalen und der vertikalen Mittelebene 13-13, 14-14 des liegend eingebauten Wassertanks 1 angeordnete Versteifungsrippe 15, 16 sowie weitere zu den mittleren Versteifungsrippen 15, 16 symmetrische, in der Grundrißebene der Tankböden 3, 4 elliptisch verlaufende Versteifungsrippen 15a, 15b; 16a, 16b auf. Die Tankböden 3, 4 werden durch das Gitterwerk der sich kreuzenden Versteifungsrippen 15, 15a, 15b; 16, 16a, 16b in dem Erddruck ausgesetzte Belastungsflächen 17 mit annähernd gleichem Flächeninhalt aufgeteilt.

Die Versteifungsrippen 15, 15a, 15b; 16, 16a, 16b, die ein Hohlprofil 18, vorzugsweise ein Trapezprofil, aufweisen, sind nach außen aus den Tankböden 3, 4 ausgeformt.

Die Profilhöhe H₁ der mittleren horizontalen Versteifungsrippe 15 und der zu dieser symmetrischen Versteifungsrippen 15a, 15b und der Profilhöhe H₂ der mittleren vertikalen Versteifungsrippe 16 und der zu dieser symmetrischen Versteifungsrippen 16a, 16b der Tankböden 3, 4 sind unterschiedlich groß.

Durch das Gitterwerk der sich kreuzenden horizontalen und vertikalen Versteifungsrippen 15, 15a, 15b; 16, 16a, 16b der Tankböden 3, 4 und die in Umfangsrichtung des zylindrischen Mantels 2 verlaufenden Versteifungsrippen 19 wird eine hohe statische Festigkeit des Wassertanks 1 für den unterirdischen Einbau erreicht.

An den oberen Abschnitt 2a des Tankmantels 2 ist ein Gehäuseaufsatz 20 mit markierten, vor Ort beim Einbau des Wassertanks 1 aufzubohrenden Löchern 21 zum Anschluß des Zulaufrohres 10, des Überlaufrohres 11 und des Entnahmerohres 12 für eine schwimmende Absaugung des Wassers unter der Wasseroberfläche mittels eines an das Entnahmerohr 12 angeschlossenen, flexiblen Kunststoffschlauchs 40 mit einem Schwimmer 41 angeformt. Der Gehäuseaufsatz 20 ist mit erhabenen Beschriftungsflächen 22 ausgestattet.

Der Tankdom 5, dessen Höhe H₃ entsprechend der Einbautiefe des Wassertanks 1 stufenlos verstellbar ist, besteht aus einem an dem Gehäuseaufsatz 20 angeformten Gewindestutzen 23 und einem auf diesen aufschraubbaren Verlängerungsstück 24, das die Form eines Doppel-Kegelstumpfes besitzt und mit einer unteren kegeligen Mantelfläche 25 zur Abstützung in einem Kies-, Sand- oder Schotterbett 26 im Erdreich ausgestattet ist.

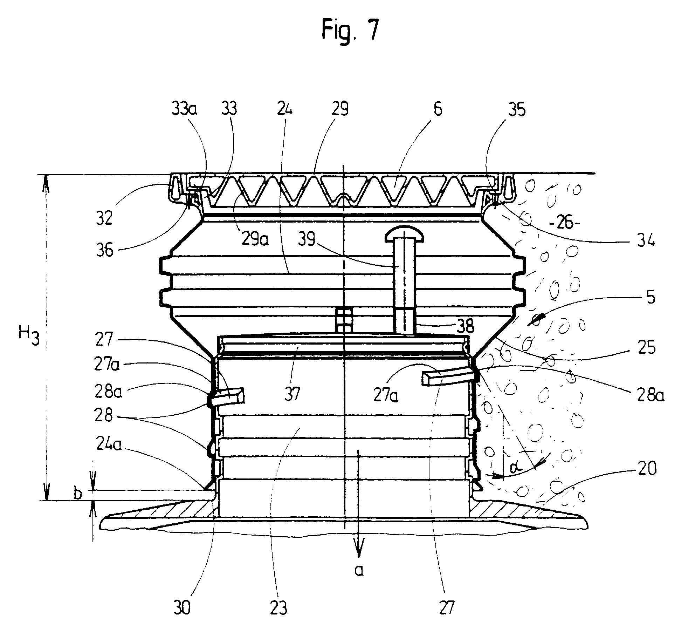

Der Gewindestutzen 23 des Doms 5 weist Außengewindesegmente 27 und das Verlängerungsstück 24 ein entsprechendes durchgehendes Innengewinde 28 auf. Die miteinander in Eingriff stehenden Gewinde 27, 28 des Gewindestutzens 23 und des Verlängerungsstückes 24 des Tankdoms 5 bilden eine Überlastungssicherung, derart, daß bei einer Überlastung des Tankdoms 5 durch äußere Verkehrslasten z.B. beim Überfahren des versenkt in einem Kies-, Sand- oder Schotterbett 26 angeordneten Domdeckels 29 durch einen schweren Bagger im rauhen Baustellenbetrieb das Verlängerungsstück 24 auf dem Gewindestutzen 23 des Doms 5 in Pfeilrichtung a begrenzt nach unten rutschen kann und die großen Gewichtkräfte über die untere kegelige Mantelfläche 25 des Verlängerungsstückes 24 in das Kies-, Sand- oder Schotterbett 26 und das Erdreich abgetragen werden und der Tankmantel 2 durch die Überlast nicht beansprucht wird (Fig. 7).

Das Rutschen des Verlängerungsstücks 24 auf dem Gewindestutzen 23 des Tankdoms 5 bei einer hohen Belastung des Doms wird dadurch ermöglicht, daß die Außengewindesegmente 27 des Gewindestutzens 23 und das Innengewinde 28 des Verlängerungsstückes 24 als Flachgewinde ausgebildet sind und daß die tragenden Flanken 27a, 28a der Außengewindesegmente 27 und des Innengewindes 28 unter einem flachen Winkel α verlaufen.

Bei einer minimalen Höhe H₃ des Tankdoms 5 weist die Unterkante 24a des Verlängerungsstückes 24 einen Abstand b vom Fuß 30 des Gewindestutzens 23 auf, wobei der Abstand b durch die Anordnung des untersten Außengewindesegments 27 auf dem Gewindestutzen 23 festgelegt ist. Dadurch wird erreicht, daß der Tankmantel 2 bei Einwirkung von Gewichtskräften auf den Domdeckel 29 nicht beansprucht wird.

Das Verlängerungsstück 24 des Tankdoms 5 weist ein muffenartig ausgebildetes oberes Ende 31 mit einem äußeren, nach oben vorstehenden Ring 32 und einem inneren Ring 33 auf, der mit dem äußeren Ring 32 durch einen Flachring 34 verbunden ist, eine kleinere Höhe als der äußere Ring 32 besitzt und als Auflage für den versenkt in das obere Ende 31 des Verlängerungsstücks 24 eingesetzten Domdeckel 29 dient, wobei der äußere Ring 32, der innere Ring 33 und der Flachring 34 einen Ringkanal 35 mit Ablauflöchern 36 in dem Flachring 34 für in den Ringkanal 35 fließendes Oberflächenwasser bilden (Fign. 4 und 7).

Auf den Gewindestutzen 23 des Tankdoms 5 ist ein weiterer Verschlußdeckel 37 mit einem Anschlußstutzen 38 für ein bis zum oberen Endbereich des Verlängerungsstückes 24 des Doms 5 geführtes End- und Belüftungsrohr 39 aufgesetzt, wobei die Luft zwischen der verrippten Unterseite 29a des Domdeckels 29 und der Auflagefläche 33a des inneren Ringes 33 des oberen Endes 31 des Verlängerungsstücks 24 durchtritt.

## Patentansprüche

1. Wassertank (1) aus Kunststoff für die Speicherung von Regenwasser, der als Erdtank ausgebildet ist, dessen einteilig hergestellter Tankkörper aus einem zylindrischen Mantel (2) und zwei Böden (3,4) mit Verstärkungsrippen (19) besteht und der mit einem Dom (5) mit einer Einsteigöffnung und Anschlüssen (79) für ein Zulauf- (10), ein Überlauf- (11) und ein Entnahmerohr (12) ausgerüstet ist, dadurch gekennzeichnet, daß die als Klöpperböden ausgebildeten Tankböden (3, 4) jeweils eine in der horizontalen und der vertikalen Mittelebene (13-13; 14-14) des liegend eingebauten Tanks (1) angeordnete Versteifungsrippe (15, 16) sowie weitere zu den mittleren Versteifungsrippen (15, 16) symmetrische, in der Grundrißebene der Tankböden (3, 4) elliptisch verlaufende Versteifungsrippen (15a, 15b; 16a, 16b) aufweisen, daß die Tankböden (3, 4) durch das Gitterwerk der sich kreuzenden Versteifungsrippen (15, 15a, 15b; 16, 16a, 16b) in dem Erddruck ausgesetzte Belastungsflächen (17) mit annähernd gleichem Flächeninhalt aufgeteilt sind und daß die Höhe (H₃) des Domes (5) des Wassertanks (1) entsprechend der Einbautiefe des Tanks stufenlos verstellbar ist.

2. Wassertank nach Anspruch 1, dadurch gekennzeichnet, daß die Verstärkungsrippen (15, 15a, 15b; 16, 16a, 16b) ein Hohlprofil (18) aufweisen und nach außen aus den Tankböden (3, 4) ausgeformt sind.

3. Wassertank nach Anspruch 1 und 2, gekennzeichnet durch Verstärkungsrippen (15, 15a, 15b; 16, 16a,.16b) mit einem Trapezprofil.

4. Wassertank nach einem der Ansprüche 1 bis 3, dadurch gekennzeichnet, daß die Profilhöhe (H₁) der mittleren horizontalen Versteifungsrippe (15) und der zu dieser symmetrischen Versteifungsrippen (15a, 15b) und die Profilhöhe (H₂) der mittleren vertikalen Versteifungsrippe (16) und der zu dieser symmetrischen Versteifungsrippen (16a, 16b) der Tankböden (3, 4) unterschiedlich groß sind.

5. Wassertank nach einem der Ansprüche 1 bis 4, gekennzeichnet durch einen an den oberen Abschnitt (2a) des Tankmantels (2) angeformten Gehäuseaufsatz (20) mit markierten, vor Ort beim Einbau des Tanks (1) aufzubohrenden Löchern (21) zum Anschluß eines Zulauf- (10), eines Überlauf- (11) und eines Entnahmerohres (12).

6. Wassertank nach einem der Ansprüche 1 bis 5, dadurch gekennzeichnet, daß der Tankdom (5) aus einem an dem Gehäuseaufsatz (20) angeformten Gewindestutzen (23) und einem auf diesen oder in diesen aufschraubbaren oder einschraubbaren Verlängerungsstück (24) besteht, das sich in einem Kies-, Sand- oder Schotterbett (26) im Erdreich abstützt.

7. Wassertank nach Anspruch 6, dadurch gekennzeichnet, daß das Verlängerungsstück (24) die Form eines Doppel-Kegelstumpfes besitzt und eine untere kegelige Mantelfläche (25) zur Abstützung in einem Kies-, Sand- oder Schotterbett (26) im Erdreich aufweist.

8. Wassertank nach einem der Ansprüche 1 bis 7, dadurch gekennzeichnet, daß der Gewindestutzen (23) des Doms (5) Außengewindesegmente (27) und das Verlängerungsstück (24) ein entsprechendes durchgehendes Innengewinde (28) aufweist und daß die miteinander in Eingriff stehenden Gewinde (27, 28) des Gewindestutzens (23) und des Verlängerungsstückes (24) des Tankdoms (5) eine Überlastungssicherung bilden, derart, daß bei einer Überlastung des Tankdoms (5) durch äußere Verkehrslasten und dgl. das Verlängerungsstück (24) auf dem Gewindestutzen (23) des Doms (5) begrenzt nach unten rutschen kann.

9. Wassertank nach einem der Ansprüche 1 bis 8, dadurch gekennzeichnet, daß die Außengewindesegmente (27) des Gewindestutzens (23) und das Innengewinde (28) des Verlängerungsstückes (24) des Tanks (5) als Flachgewinde ausgebildet sind und daß die tragenden Flanken (27a, 28a) der Außengewindesegmente (27) und des Innengewindes (28) unter einem flachen Winkel (α) verlaufen.

10. Wassertank nach einem der Ansprüche 1 bis 9, dadurch gekennzeichnet, daß bei einer minimalen Höhe (H₃) des Tankdoms (5) die Unterkante (24a) des Verlängerungsstückes (24) einen Abstand (b) vom Fuß (30) des Gewindestutzens (23) aufweist, der (b) durch die Anordnung des untersten Außengewindesegmentes (27) auf dem Gewindestutzen (23) festgelegt ist.

11. Wassertank nach einem der Ansprüche 1 bis 10, dadurch gekennzeichnet, daß das Verlängerungsstück (24) des Tankdoms (5) ein muffenartig ausgebildetes oberes Ende (31) mit einem äußeren, nach oben vorstehenden Ring (32) und einem inneren Ring (33) aufweist, der mit dem äußeren Ring (32) durch einen Flachring (34) verbunden ist, eine kleinere Höhe als der äußere Ring (32) besitzt und als Auflage für einen versenkt in das obere Ende (31) des Verlängerungsstücks (24) eingesetzten Domdeckel (29) dient, wobei der äußere Ring (32), der innere Ring (33) und der Flachring (34) einen Ringkanal (35) mit Ablauflöchern (36) in dem Flachring (34) für in den Ringkanal (35) fließendes Oberflächenwasser bilden.

12. Wassertank nach einem der Ansprüche 1 bis 11, gekennzeichnet durch einen auf den Gewindestutzen (23) des Tankdoms (5) aufsetzbaren weiteren Verschlußdeckel (37) mit einem Anschlußstutzen (38) für ein bis zum oberen Endbereich des Verlängerungsstückes (24) des Doms (5) geführtes Ent- und Belüftungsrohr (39), wobei die Luft zwischen der verrippten Unterseite (29a) des Domdeckels (29) und der Auflagefläche (33a) des inneren Rings (33) des oberen Endes (31) des Verlängerungsstücks (24) durchtritt.

13. Wassertank nach einem der Ansprüche 1 bis 12, dadurch gekennzeichnet, daß dieser (1) mittels eines Rotationssinterverfahrens hergestellt ist.

## Revendications

1. Citerne (1) à eau en matière plastique pour emmagasiner de l'eau de pluie, qui est constituée en citerne enterrée, dont le corps de citerne fabriqué d'une seule pièce est constitué d'une virole (2) cylindrique et de deux fonds (3, 4) ayant des nervures (19) de renforcement et qui est muni d'un dôme (5) ayant un trou d'accès et de raccords (79) pour un tuyau (10) d'entrée, un tuyau (11) de débordement et un tuyau (12) de sortie, caractérisée en ce que les fonds (3, 4) de la citerne constitués sous la forme de fonds torosphériques, ont respectivement une nervure (15, 16) de renforcement disposée dans le plan (13-13) médian horizontal et le plan (14-14) médian vertical de la citerne (1) disposée horizontalement ainsi que d'autres nervures (15a, 15b; 16a, 16b) de renforcement symétriques par rapport aux nervures (15, 16) médianes de renforcement et s'étendant de manière elliptique dans le plan de projection des fonds (3, 4) de la citerne, en ce que le réseau des nervures (15, 15a, 15b; 16, 16a, 16b) de renforcement qui s'entrecroisent subdivise la face (17) de chargement, soumise à la pression des terres, des fonds (3, 4) de la citerne en des surfaces sensiblement égales et en ce que la hauteur (H₃) du dôme (5) de la citerne (1) à eau est réglable par paliers en fonction de la profondeur d'enterrement de la citerne.

2. Citerne à eau suivant la revendication 1, caractérisée en ce que les nervures (15, 15a, 15b ; 16, 16a, 16b) de renforcement ont un profil (18) creux et sont formées par déformation vers l'extérieur des fonds (3, 4) de la citerne.

3. Citerne à eau suivant les revendication 1 et 2, caractérisée en ce que les nervures (15, 15a, 15b; 16, 16a, 16b) de renforcement ont un profil trapézoïdal.

4. Citerne à eau suivant l'une des revendications 1 à 3, caractérisée en ce que la hauteur (H₁) du profil de la nervure (15) de renforcement médiane horizontale et des nervures (15a, 15b) de renforcement symétriques par rapport à celle-ci et la hauteur (H₂) du profil de la nervure (16) de renforcement médiane vertical et des nervures (16a, 16b) de renforcement symétriques par rapport à celle-ci des fonds (3, 4) de la citerne sont différentes.

5. Citerne à eau suivant l'une des revendications 1 à 4, caractérisée par un puits (20) formé à la partie (2a) supérieure de la virole (2) de la citerne et ayant des trous (21) repérés et à percer lorsque la cuve (1) est mise en terre pour le raccordement d'un tuyau (10) d'entrée, d'un tuyau (11) de débordement et d'un tuyau (12) de sortie.

6. Citerne à eau suivant l'une des revendications 1 à 5, caractérisée en ce que le dôme (15) de la citerne est constitué d'une tubulure (23) filetée formée sur le puits (20) et d'un prolongement (24) pouvant se visser sur celui-ci ou dans celui-ci et qui s'appuie dans la terre dans un lit (26) de gravier, de sable ou de cailloux.

7. Citerne à eau suivant la revendication 6, caractérisée en ce que le prolongement (24) a la forme d'un double tronc de cône et comporte une surface (25) latérale inférieure conique pour s'appuyer dans la terre dans un lit (26) de gravier de sable ou de cailloux.

8. Citerne à eau suivant l'une des revendications 1 à 7, caractérisée en ce que la tubulure (23) filetée du dôme (5) comporte des segments (27) filetés et le prolongement (24) un taraudage (28) continu correspondant et en ce que le filetage (27) de la tubulure (23) filetée et le taraudage (28) du prolongement (24) du dôme (5) de la citerne qui viennent en prise forment une sécurité à une surcharge de sorte que, si une charge de circulation extérieure et analogue passe sur le dôme (5) de la citerne, le prolongement (24) peut glisser vers le bas de manière limitée sur la tubulure (23) filetée du dôme (5).

9. Citerne à eau suivant l'une des revendications 1 à 8, caractérisée en ce que les segments (27) de filetage de la tubulure (23) filetée et le taraudage (28) du prolongement (24) de la citerne (5) sont constitués en filetage droit et en ce que les flancs (27a, 28a) portant des segments (27) du filetage et du taraudage (28) font un angle dièdre (α).

10. Citerne à eau suivant l'une des revendications 1 à 9, caractérisé en ce que pour une hauteur (H₃) minimum du dôme (5) de la citerne, le bord (24a) inférieur du prolongement (24) est à une distance (b) du pied (30) de la tubulure (23) filetée, cette distance (b) étant fixée dans la position du segment (27) fileté le plus bas sur la tubulure (23) filetée.

11. Citerne à eau suivant l'une des revendications 1 à 10, caractérisée en ce que le prolongement (24) du dôme (5) de la citerne comporte une extrémité (31) supérieure constituée sous la forme d'un manchon ayant un anneau (32) extérieur en saillie vers le haut et un anneau (33) inférieur qui est relié à l'anneau (32) extérieur par un anneau (34) plat, à une hauteur plus petite que l'anneau (32) extérieur et sert d'appui pour un couvercle (29) de dôme enfoncé dans l'extrémité (31) supérieure du prolongement (24), l'anneau (32) extérieur, l'anneau (31) intérieur et l'anneau (34) plat formant un canal (35) annulaire ayant des trous (36) d'évacuation ménagés dans l'anneau (34) plat pour de l'eau superficielle passant dans le canal (35) annulaire.

12. Citerne à eau suivant l'une des revendications 1 à 11, caractérisée par un autre couvercle (37) de fermeture pouvant être posé sur la tubulure (23) filetée du dôme (5) de la citerne et ayant un raccord (38) pour un tuyau (39) d'aération allant à la partie d'extrémité supérieure du prolongement (24) du dôme (5), l'air passant entre la face (29a) inférieure nervurée du couvercle (29) du dôme et la surface (33a) d'appui de l'anneau (33) intérieur de l'extrémité (31) supérieure du prolongement (24).

13. Citerne à eau suivant l'une des revendications 1 à 12, caractérisée en ce que celle-ci est fabriquée par un procédé de rotomoulage.

## Claims

1. Water tank (1) made of plastic material for storing rain water, which tank is configured as a buried tank, the tank body of which is produced in one-piece and comprises a cylindrical casing (2) and two bases (3, 4) with reinforcement ribs (19) and which tank is provided with a dome (5) which has an observation hole and connections (79) for an inlet pipe (10), an overflow pipe (11) and a withdrawal pipe (12), characterised in that the tank bases (3, 4), which are configured as dished bases, have respectively a reinforcement rib (15, 16), which is disposed in the horizontal and the vertical central plane (13 - 13; 14 - 14) of the water tank (1), which is installed in a horizontal position, and have further reinforcement ribs (15a, 15b; 16a, 16b) which extend symmetrically to the central reinforcement ribs (15, 16) and elliptically in the horizontal projection plane of the tank bases (3, 4), in that the tank bases (3, 4) are divided into loading faces (17), which are subject to soil pressure and have almost the same surface area, by the lattice work of the intersecting reinforcement ribs (15, 15a, 15b; 16, 16a, 16b), and in that the height (H₃) of the dome (5) of the water tank (1) is progressively adjustable corresponding to the installation depth of the tank.

2. Water tank according to claim 1, characterised in that the reinforcement ribs (15, 15a, 15b; 16, 16a, 16b) have a hollow profile (18) and are formed from the tank bases (3, 4) on the exterior.

3. Water tank according to claim 1 and 2, characterised by reinforcement ribs (15, 15a, 15b; 16, 16a, 16b) with a trapezoidal profile.

4. Water tank according to one of the claims 1 to 3, characterised in that the profile height (H₁) of the central horizontal reinforcement rib (15) and of the reinforcement ribs (15a, 15b), which are symmetrical to the latter, and the profile height (H₂) of the central vertical reinforcement rib (16) and of the reinforcement ribs (16a, 16b) of the tank bases (3, 4), which ribs are symmetrical to said reinforcement rib (16), are of different sizes.

5. Water tank according to one of the claims 1 to 4, characterised by a housing cap (20), which is moulded on the upper portion (2a) of the tank casing (2) and has marked holes (21) to be bored in situ during installation of the tank (1) in order to connect an inlet pipe (10), an overflow pipe (11) and a withdrawal pipe (12).

6. Water tank according to one of the claims 1 to 5, characterised in that the tank dome (5) comprises a screw neck (23), which is moulded on the housing cap (20), and an extension piece (24), which can be screwed onto or into said screw neck, said extension piece being supported in a bed (26) of gravel, sand or rubble in the ground.

7. Water tank according to claim 6, characterised in that the extension piece (24) has the configuration of a double truncated cone and has a lower conical casing face (25) for support in a bed (26) of gravel, sand or rubble in the ground.

8. Water tank according to one of the claims 1 to 7, characterised in that the screw neck (23) of the dome (5) has external threaded segments (27) and the extension piece (24) has a corresponding continuous internal thread (28), and in that the threads (27, 28) of the screw neck (23) and of the extension piece (24) of the tank dome (5), which threads engage with each other, form an overload safety device in such a manner that the extension piece (24) on the screw neck (23) of the dome (5) can slide downwards in a delimited manner when the tank dome (5) is subject to an overload as a result of external traffic loads and the like.

9. Water tank according to one of the claims 1 to 8, characterised in that that the external threaded segments (27) of the screw neck (23) and the internal thread (28) of the extension piece (24) of the tank (5) are configured as flat threads and in that the bearing edges (27a, 28a) of the external threaded segments (27) and of the internal thread (28) extend at a flat angle (α).

10. Water tank according to one of the claims 1 to 9, characterised in that, at a minimum height (H₃) of the tank dome (5), the lower edge (24a) of the extension piece (24) has a spacing (b) from the bottom (30) of the screw neck (23), said spacing (b) being established by the arrangement of the lowest external threaded segment (27) on the screw neck (23).

11. Water tank according to one of the claims 1 to 10, characterised in that the extension piece (24) of the tank dome (5) has an upper end (31) with a muff-like configuration, which end has an external, upwardly projecting ring (32) and an internal ring (33), which is connected to the external ring (32) by a flat ring (34), has a smaller height than the external ring (32) and serves as a support for the dome cover (29), which is inserted and embedded in the upper end (31) of the extension piece (24), the external ring (32), the internal ring (33) and the flat ring (34) forming an annular channel (35) which has discharge holes (36) in the flat ring (34) for surface water flowing into the annular channel (35).

12. Water tank according to one of the claims 1 to 11, characterised by a further sealing cap (37) having a connecting branch (38) for a breather pipe (39), which is guided up to the upper end region of the extension piece (24) of the dome (5), said sealing cap (37) being placed on the screw neck (23) of the tank dome (5), and air penetrating between, the ribbed underside (29a) of the dome cover (29) and the bearing face (33a) of the internal ring (33) of the upper end (31) of the extension piece (24).

13. Water tank according to one of the claims 1 to 12, characterised in that this (1) is produced by means of a rotational sintering method.
